# EUROPEAN PATENT SPECIFICATION

(11) **EP 3 424 850 B1**
(45) Date of publication and mention of the grant of the patent: **12.01.2022**
(21) Application number: 17382434.3
(22) Date of filing: 05.07.2017
(51) Int. Cl.: B65G 47/68, B65G 47/84

(54) **TRANFER STAR WHEEL FOR TRANSFERRING EMPTY CONTAINERS**
ÜBERTRAGUNGSSTERNRAD ZUR ÜBERTRAGUNG VON LEEREN BEHÄLTERN
VOLANT À CROISILLONS DE TRANSFERT PERMETTANT DE TRANSFÉRER DES RÉCIPIENTS VIDES

(43) Date of publication of application: 09.01.2019
(73) Proprietor: Marti Sala, Jaime, 08173 Sant Cugat del Vallès (ES); Martí Mercadé, Alex, 08173 Sant Cugat del Vallès (Barcelona) (ES)
(72) Inventor: Marti Sala, Jaime, 08173 Sant Cugat del Vallès (ES); Martí Mercadé, Alex, 08173 Sant Cugat del Vallès (Barcelona) (ES)
(74) Representative: Juncosa Miró, Jaime

(56) References cited:
- EP-A1- 3 078 615
- CH-A5- 678 616
- JP-A- S4 996 455
- JP-A- 2017 071 475

## Description

### Technical Field

The present invention relates to a transfer star wheel for transferring empty containers from an input site, in which containers delivered successively from a closed circuit are arranged in first and second levels, vertically aligned and separated by distances equivalent to one pitch, to an output site, in which said containers are arranged in a row in said second level and separated by distances equivalent to half a pitch.

### Background of the Invention

Patent document EP 3078615 A1 discloses a positioning machine for positioning empty containers, which are initially in random positions, upright on their bases and forming a row. The positioning machine has a movable structure having compartments distributed on its periphery arranged in two levels which move along a closed circuit. The compartments of the two levels are vertically aligned with one another and separated by regular distances equivalent to one pitch. Each compartment is sized to house a container upright on its base. In an upper part of the movable structure there is a loading section with two drop sites through each of which the initially scrambled empty containers are dropped upright inside the compartments of each of the two levels.

Patent document EP 3078615 A1 further discloses a transfer device for transferring the empty containers from the positioning machine to an output conveyor. The transfer device has an input site, coinciding with a discharge site of the positioning machine, in which the containers are arranged in the two levels, vertically aligned and separated by distances equivalent to one pitch, to an output site, coinciding with a loading site of the output conveyor, in which the containers are arranged in a row in one of the levels and separated by distances equivalent to half a pitch.

The transfer device of said patent document EP 3078615 A1 comprises a rotating transfer star wheel cooperating with a rotating intercalation star wheel. The rotating transfer star wheel extracts the containers from both levels of the positioning machine and transfers the containers from the lower level directly to the output conveyor at the output site while it transfers the containers from the upper level to the rotating intercalation star wheel. The rotating intercalation star wheel, in the course of each turn thereof, moves the containers from the upper level to the lower level and delivers them to the output conveyor at the output site in positions intercalated between the containers delivered to the output conveyor by the rotating transfer star wheel.

One drawback of the transfer device of said patent document EP 3078615 A1 is that the manufacture, installation, fitting out and maintenance of the two rotating star wheels, i.e., the rotating transfer star wheel and the rotating intercalation star wheel, which must turn in opposite directions and at tangential speeds coordinated with one another and in coordination with the tangential speed of the positioning machine, are complex and expensive.

Another drawback of the transfer device of said patent document EP 3078615 A1 is that when the format of the empty containers to be handled has to be changed, it requires making complex fittings and replacing a significant number of parts, which translates into considerable machine shutdown time and into storage needs for spare parts.

Document JP 2017071475 A discloses a transfer star wheel according to the preamble of claim 1. In particular, the document discloses an article delivering apparatus which can automatically perform an operation of receiving an article which is randomly seat in a random state and further delivering it to another processing means. The article delivering apparatus can receive the container while synchronizing with and follow the article to be transported by the transfer means and can further deliver the article to a later processing means even when the height level at the time of receiving articles from the transfer means is different from the height level at the time of delivering the articles to the processing means.

### Disclosure of the Invention

The invention is as stated in claim 1. The present invention contributes to mitigating the aforementioned and other drawbacks by providing a transfer star wheel for transferring empty containers from an input site to an output site. At the input site, containers delivered successively from a closed circuit are arranged in first and second levels, vertically aligned and separated by distances equivalent to one pitch. At the output site, the containers are arranged in a row in the second level and separated by distances equivalent to half a pitch.

The transfer star wheel comprises a rotating structure and a stationary structure. The rotating structure is operated by a motor to turn about a vertical axis of rotation with respect to the stationary structure. A plurality of first gripping elements and a plurality of second gripping elements are distributed along a periphery of the rotating structure. The first gripping elements are arranged for gripping the containers located in the first level at the input site and the second gripping elements are arranged for gripping the containers located in the second level at the input site.

The rotating star wheel further comprises a vertical movement mechanism connected to the first gripping elements and a circumferential movement mechanism likewise connected to the first gripping elements or alternatively to the second gripping elements.

The vertical movement mechanism comprises first guiding elements and is configured for moving the first gripping elements along the first guiding elements from the first level at the input site to the second level at the output site and back to the first level at the input site in the course of each turn of the rotating structure.

The circumferential movement mechanism comprises second guiding elements and is configured for moving the first gripping elements or the second gripping elements along the second guiding elements from a circumferential position corresponding to the pitch at the input site to a circumferential position moved backward or forward half a pitch at the output site and back to the circumferential position corresponding to the pitch at the input site in the course of each turn of the rotating structure.

The vertical movement mechanism and the circumferential movement mechanism are operated in a coordinated manner such that the containers received in the first level at the input site and the containers received in the second level at the input site are all arranged in the second level, intercalated with one another and separated by distances equivalent to half a pitch at the output site.

The first guiding elements comprise vertical guides fixed in the rotating structure and the first gripping elements are installed in first slides slidingly coupled to the vertical guides, and the second guiding elements comprise circumferential guides fixed in the rotating structure and the second gripping elements are installed in second slides slidingly coupled to the circumferential guides.

In one embodiment, the vertical movement mechanism comprises a first cam fixed to the stationary structure and first cam followers fixed to the first slides and coupled to the first cam, and the circumferential movement mechanism comprises a second cam fixed to the stationary structure and rockers pivotingly installed in the rotating structure, where each of the rockers comprises a first arm carrying a second cam follower coupled to the second cam and a second arm slidingly coupled to one of the second slides. For example, the first cam is a front cylindrical cam or barrel cam and the second cam is a flat cam with an eccentric groove.

The first gripping elements and the second gripping elements preferably comprise suction cups installed in the rotating structure, and the suction cups are pneumatically communicated with a suction chamber, at least along a rotational path of the suction cups from the input site to the output site.

In one embodiment, each of the suction cups making up the first and second gripping elements has a suction port on an outer side of the rotating structure and an air outlet on an inner side of the rotating structure. The suction ports of all the suction cups are located at equal radial distances from the axis of rotation of the rotating structure. The suction port in each suction cup is communicated with the air outlet by means of an air passage.

In one embodiment, the suction chamber comprises a stationary chamber section and a rotating chamber section which are communicated with one another. The stationary chamber section is fixed to the stationary structure and pneumatically communicated with a low pressure source and the rotating chamber section is fixed to the rotating structure and pneumatically communicated with the suction cups making up the first and second gripping elements. The stationary chamber section and the rotating chamber section are coupled to one another with a loose fit which allows for contactless rotation of the rotating chamber section with respect to the stationary chamber section.

For example, the rotating chamber section has a circular opening concentric with the axis of rotation and the stationary chamber section has a cylindrical wall inserted in the circular opening of the rotating chamber section with the mentioned loose fit. In an equivalent alternative construction, the stationary chamber section has a circular opening concentric with the axis of rotation and the rotating chamber section has a cylindrical wall inserted in the circular opening of the stationary chamber section with the mentioned loose fit.

The suction cups making up the first gripping elements are pneumatically communicated with first air inlets of the rotating chamber section by telescopic conduits including a fixed conduit section fixed to the rotating chamber section in a position parallel to the vertical guides and a movable conduit section fixed to the corresponding first slide and slidingly coupled in the fixed conduit section. The suction cups making up the second gripping elements are pneumatically communicated with second air inlets of the rotating chamber section by conduits including a flexible conduit section.

In another embodiment, the suction chamber, which is pneumatically communicated with a low pressure source, is fixed in the stationary structure and has a cylindrical outer wall provided with one or more openings facing and adjacent to a rotational path of the air outlets of the suction cups between the input site and the output site. The first slides are associated with first cover plates and the second slides are associated with second cover plates. The first and second cover plates cover parts of the openings of the suction chamber not facing the suction cups.

The first cover plates extend from both sides of each first slide in positions facing and adjacent to the cylindrical outer wall of the suction chamber without there being any contact between the first cover plates and the cylindrical outer wall of the suction chamber. The first cover plates have end side portions partially overlapping one another.

Each of the first cover plates is fixed to a carriage slidingly coupled to a guide portion of the corresponding first slide parallel to the vertical guide, and a plate portion of the first slide is slidingly coupled to an elongated opening of the corresponding first cover plate. A movement of the carriage together with the first cover plate along the guide portion of the first slide has a limit determined by contact between the first cover plate and one of the second slides adjacent to the output site. A movement of the plate portion of the first slide along the elongated opening of the first cover plate has a limit determined by contact between the plate portion of the first slide and an end of the elongated opening of the first cover plate.

The second cover plates are fixed to the second slides and extend from both sides of each second slide in positions facing and adjacent to the cylindrical outer wall of the suction chamber without there being any contact between the second cover plates and the cylindrical outer wall of the suction chamber. The second cover plates have end side portions partially overlapping one another when the second slides circumferentially approach one another during rotation of the rotating structure.

In an alternative embodiment, the first and second gripping elements could comprise mechanical clamps operated, for example, by cams, electric motors or pneumatic actuators.

Therefore, the transfer star wheel of the present invention performs, with a single rotating structure, the vertical movement and circumferential movement functions for delivering the empty containers in the second level and in intercalated positions separated by half a pitch at the output site, which entails an easier manufacture, installation, fitting out and maintenance compared with devices from the prior art.

Furthermore, when the transfer star wheel of the present invention uses suction cups as the first and second gripping elements, it has the advantage of not requiring any fitting or replacement of parts to be adapted to empty containers having different formats as a result of the fact that the suction ports of the suction cups are located at equal radial distances from the axis of rotation of the rotating structure.

Therefore, given that in a rotating positioning machine, from which the transfer star wheel can receive the empty containers at the input site, the empty containers are moved with a surface thereof pressed against an outer railing due to the effect of centrifugal force, the path of this surface of the empty containers in the positioning machine is tangent to the path of the suction ports of the suction cups in the transfer star wheel, whatever the format of the empty containers is. This reduces machine shutdown times and the storage needs for spare parts compared with devices from the prior art.

### Brief Description of the Drawings

The foregoing and other features and advantages will be better understood from the following detailed description of a merely illustrative and non-limiting embodiment in relation to the attached drawings, in which:
Figure 1 shows a transfer star wheel according to a first embodiment of the present invention applied to transferring empty containers from a positioning machine to an output conveyor;
Figure 2 is a perspective view of the transfer star wheel of Figure 1 showing first gripping elements and second gripping elements;
Figure 3 is a schematic cross-section view of the transfer star wheel of Figure 1 taken along a central vertical plane including an input site and an output site;
Figure 4 is a perspective view showing part of a vertical movement mechanism connected to the first gripping elements of the transfer star wheel of Figure 1;
Figure 5 is a perspective view showing the vertical movement mechanism connected to the first gripping elements;
Figure 6 is a perspective view of a circumferential movement mechanism connected to the second gripping elements of the transfer star wheel of Figure 1;
Figure 7 is a schematic plan view illustrating the operation of the circumferential movement mechanism;
Figure 8 is a perspective view showing a suction chamber of the transfer star wheel of Figure 1;
Figure 9 is a perspective view showing cover shields associated with the first gripping elements;
Figure 10 is a perspective view of a transfer star wheel according to a second embodiment of the present invention showing first gripping elements and second gripping elements;
Figure 11 is a schematic cross-section view of the transfer star wheel of Figure 10 taken along a central vertical plane including an input site and an output site;
Figure 12 is a perspective view showing a suction chamber and part of a circumferential movement mechanism of the transfer star wheel of Figure 10;
Figure 13 is a perspective view showing the suction chamber, part of the vertical movement mechanism and part of the circumferential movement mechanism of the transfer star wheel of Figure 10;
Figure 14 is a perspective view showing the vertical movement mechanism connected to the first gripping elements of the transfer star wheel of Figure 10; and
Figure 15 is a perspective view showing the circumferential movement mechanism connected to the second gripping elements of the transfer star wheel of Figure 10.

### Detailed Description of several Embodiments

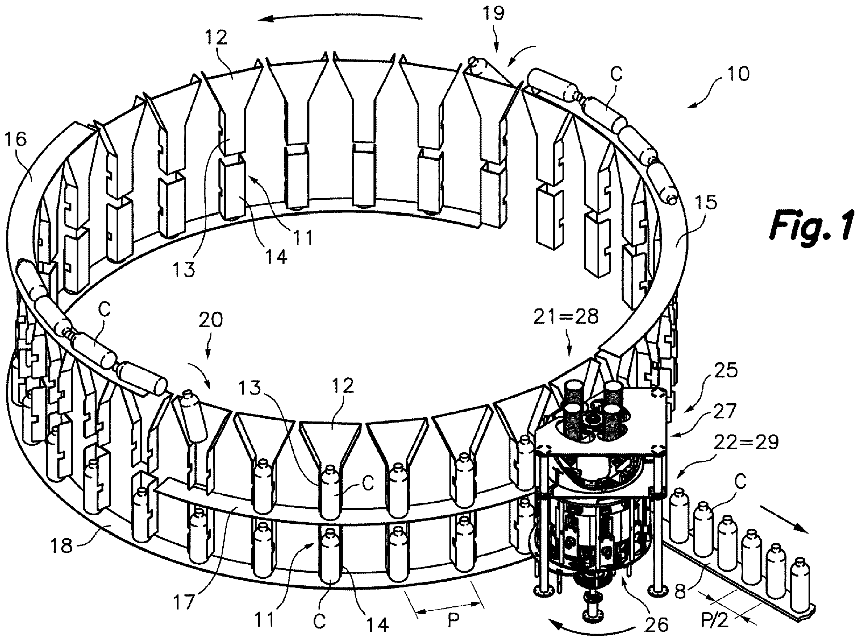

First referring to Figure 1, reference number 25 generally denotes a transfer star wheel according to a first embodiment of the present invention, which is arranged in the shown example for transferring empty containers C from a positioning machine 10 to an output conveyor 8.

The transfer star wheel 25 is arranged for transferring empty containers C from an input site, coinciding with a discharge site 21 of the positioning machine 10, in which the empty containers C are arranged in first and second levels, vertically aligned and separated by distances equivalent to one pitch P, to an output site, coinciding with a loading site 22 of the output conveyor 8, in which the empty containers C are arranged in a row in the second level and separated by distances equivalent to half a pitch P/2.

In the shown example, the positioning machine 10, which is not part of the present invention, is of a known type comprising a carrousel rotating about a vertical axis provided with a plurality of alignment compartments 11 distributed on its periphery, such that the alignment compartments 11 turn together with the rotating carrousel along a closed circuit defining a circular path. The alignment compartments 11 are separated from one another by a distance in a circumferential direction equivalent to one pitch P. Each alignment compartment 11 comprises an input chute 12, an upper compartment section 13, and a lower compartment section 14, aligned in a vertical direction.

Each of the upper compartment sections 13 and lower compartment sections 14 is sized to house an empty container C arranged upright on its base and has open upper and lower ends. Each input chute 12 has an upper opening sized to receive an empty container C arranged in the lying down position, and a lower opening communicated with the open upper end of the corresponding upper compartment section 13.

First and second stationary input supporting planes 15, 16 are located above the upper openings of the input chutes 12. The first input supporting plane 15 has a final end in the turning direction of the positioning machine 10 which determines a first drop site 19 and the second input supporting plane 16 has a final end in the turning direction of the positioning machine 10 which determines a second drop site 20. Furthermore, the first input supporting plane 15 has an initial end located after the second drop site 20 in the turning direction of the positioning machine 10, and the second input supporting plane 16 has an initial end located after the first drop site 19 in the turning direction of the positioning machine 10.

The positioning machine 10 further comprises a covering with a plurality of peripheral cavities (not shown) turning with the rotating carrousel above the first and second stationary input supporting planes 15, 16. Each of the peripheral cavities has an upper opening and an open bottom, and is sized to receive an empty container C in a lying down position oriented in a direction which is aligned with or tangent to a forward movement direction, either with its base in a forward position or with its base in a rearward position. The peripheral cavities include retaining elements configured for holding a prominent portion of the empty container C, such as a neck of the empty container C, for example, whether the empty container C is oriented with its base in a forward or rearward position, such that the empty containers always fall on their base into the input chutes 12.

Below the open lower ends of the lower compartment sections 14 of the alignment compartments 11 there is arranged a stationary lower supporting plane 18 extending in the circumferential direction from below the first drop site 19 to the discharge site 21 where the transfer star wheel 25 interacts with the positioning machine 10, and under the open lower ends of the upper compartment sections 13 of the alignment compartments 11 there is arranged a stationary upper supporting plane 17 extending in the circumferential direction from below the second drop site 20 to the discharge site 21.

In the shown example, the output conveyor 8, which is not part of the present invention, is of a known type comprising a movable belt located at the same level as the lower supporting plane 18 of the positioning machine 10. The empty containers C are arranged on the movable belt in a row and separated by distances equivalent to half a pitch P/2. The empty containers C are delivered by the transfer star wheel 25 in the loading site 22 of the output conveyor 8.

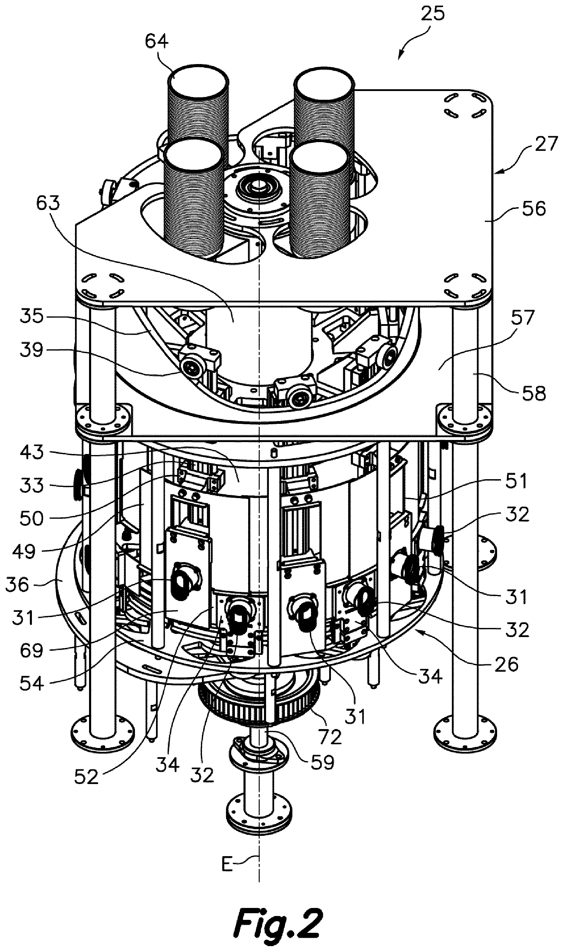

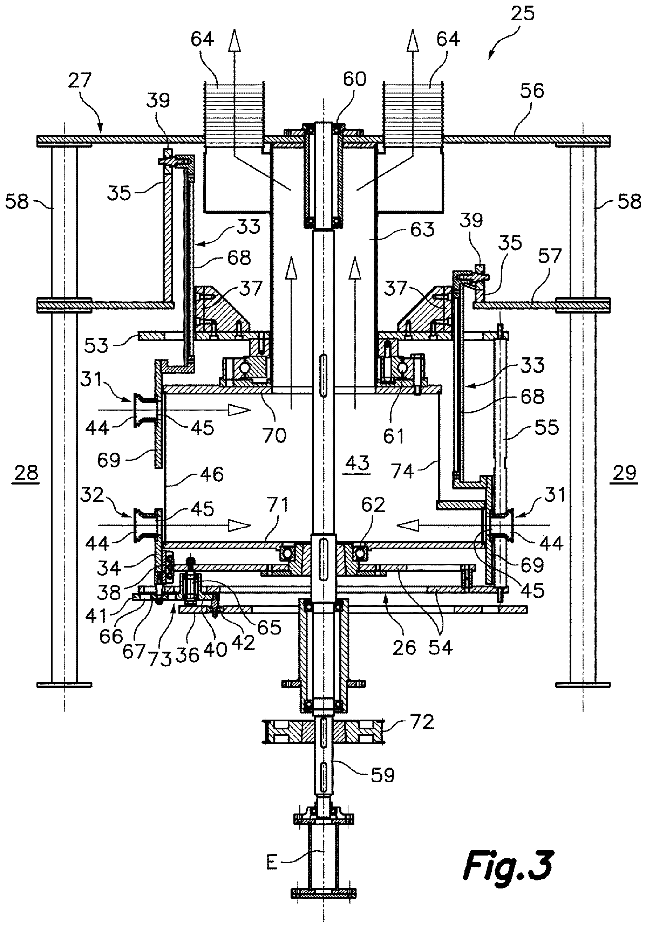

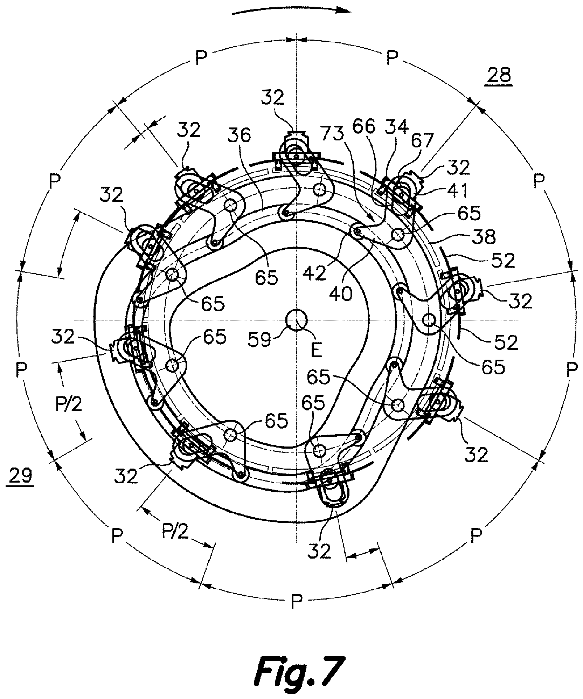

As best shown in Figures 2 and 3, the transfer star wheel 25 comprises a rotating structure 26 installed in a stationary structure 27 such that it can turn about a vertical axis of rotation E. The rotating structure 26 is fixed to a turning shaft 59 coaxial with the axis of rotation E, and a motor (not shown) imparts rotational movement to the rotating structure 26 by means of a mechanical transmission including, for example, a pulley 72 fixed to the turning shaft 59. The transfer star wheel 25 has an input site 28 (Figures 3 and 7) coinciding with the discharge site 21 of the positioning machine 10 and an output site 29 coinciding with the loading site of the output conveyor 8.

The stationary structure 27 has an upper plate 56 and a lower plate 57 connected to one another by a plurality of connecting bars 58. A suction chamber 43, the function and features of which will be described below, is fixed to the stationary structure 27. The rotating structure 26 comprises an upper plate 53 and a lower plate 54 connected to one another by a plurality of connecting bars 55. The turning shaft 59 together with the rotating structure 26 is rotationally guided with respect to the stationary structure 27 and with respect to the suction chamber 43 by bearings 60, 61, 62.

A plurality of first gripping elements 31 and a plurality of second gripping elements 32 are distributed along a periphery of the rotating structure 26. The rotating structure 26 turns in a direction opposite the turning direction of the rotating carrousel of the positioning machine 10 and at a speed selected so that the tangential speed of the first and second gripping elements 31, 32 of the rotating structure 26 is equivalent to the tangential speed of the alignment compartments 11 of the positioning machine 10 and the forward movement speed of the output conveyor 8.

The first gripping elements 31 are arranged for gripping the empty containers C located in a first level coinciding with the upper level of the positioning machine 10 at the input site 28 and for releasing the empty containers C in a second level coinciding with the lower level of the positioning machine 10 and with the level of the output conveyor 8 at the output site 29. The second gripping elements 32 are arranged for gripping the empty containers C located in the second level at the input site 28 and for releasing the empty containers C in the same second level at the output site 29.

The first gripping elements 31 are installed in first slides 33 slidingly coupled to vertical guides 37 fixed in the rotating structure 26. The vertical guides 37 make up first guiding elements and the second gripping elements 32 are installed in second slides 34 slidingly coupled to circumferential guides 38 fixed in the rotating structure 26. The circumferential guides 38 make up second guiding elements.

The rotating star wheel 25 further comprises a vertical movement mechanism and a circumferential movement mechanism. The vertical movement mechanism is configured for moving the first slides 33 together with the first gripping elements 31 along the vertical guides 37 from the first level or upper level at the input site 28 to the second level or lower level at the output site 29 and back to the first level or upper level at the input site 28 in the course of each turn of the rotating structure 26.

The circumferential movement mechanism (best shown in Figure 7) is configured for moving the second slides 34 together with the second gripping elements 32 along the circumferential guides 38 from a circumferential position corresponding to the pitch P at the input site 28 to a circumferential position moved half a pitch P/2 at the output site 29 and back to the circumferential position corresponding to the pitch P at the input site 28 in the course of each turn of the rotating structure 26.

The position of the second gripping elements moved half a pitch P/2 at the output site 29 provided by the circumferential movement mechanism leaves enough space for the vertical movement mechanism to place the first gripping elements 31 in the second level or lower level and in positions intercalated between the second gripping elements 32 at the output site 29. In Figure 3, the second gripping elements 32 are not visible at the output site 29 (shown on the right side of Figure 3) since they are moved half a pitch P/2 with respect to the first gripping elements 31.

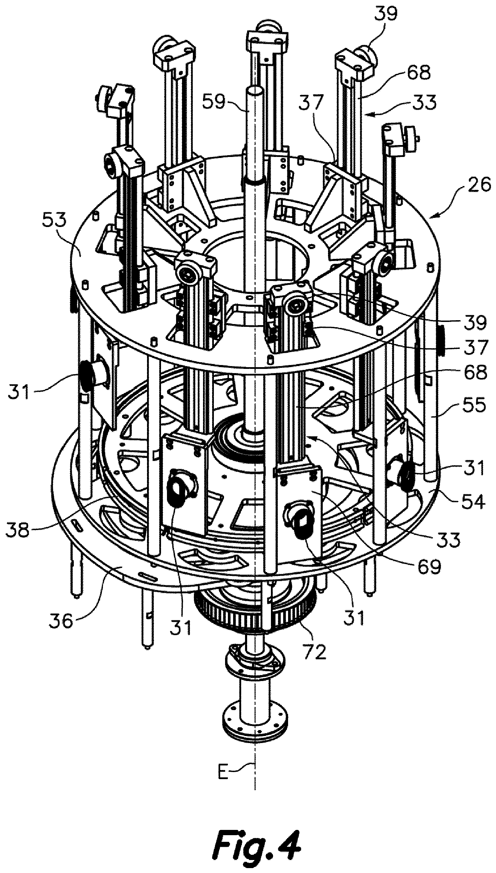

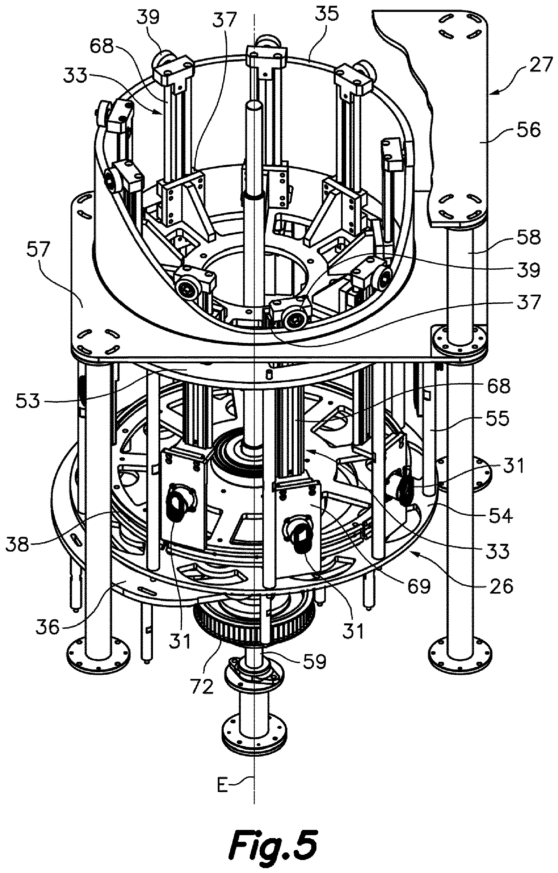

The vertical movement mechanism (best shown in Figures 4 and 5) comprises a first cam 35 fixed to the lower plate 57 of the stationary structure 27 and first cam followers 39 fixed to upper ends of the first slides 33. The first cam 35 is a barrel cam, and more specifically a front cylindrical cam, and the first cam followers 39 are wheels coupled to a front surface of the first cam 35, such that when the rotating structure 26 turns, the first cam followers 39 follow the contour of the first cam 35 and the first slides 33 together with the first gripping elements 31 are moved back and forth in directions parallel to the axis of rotation E of the rotating structure 26.

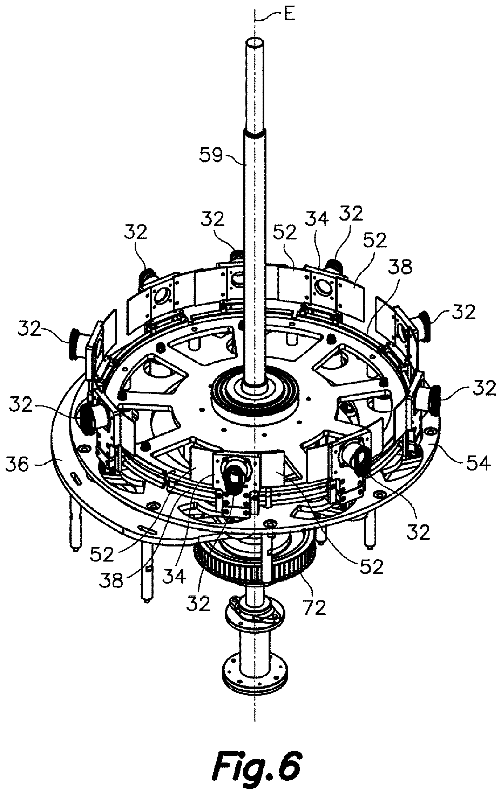

The circumferential movement mechanism (best shown in Figures 6 and 7) comprises a second cam 36 fixed to the stationary structure 27 and rockers 73 pivotingly installed in the rotating structure 26 (not shown in Figure 7) by means of articulating pins 65 distributed at regular intervals around a circumference in the rotating structure 26. In the illustrated example, the second cam 36 is a flat cam with an eccentric groove. Each of the rockers 73 comprises a first arm 40 carrying a second cam follower 42 coupled to the second cam 36 and a second arm 41 having an elongated hole 66 in which a pin 67 fixed to one of the second slides 34 is slidingly coupled.

When the rotating structure 26 turns, the second cam followers 42 follow the groove of the second cam 36 and the second slides 34 together with the second gripping elements 32 are moved back and forth in circumferential directions concentric with the axis of rotation E of the rotating structure 26.

In the illustrated example, the first gripping elements 31 and the second gripping elements 32 comprise suction cups located at equal radial distances from the axis of rotation E of the rotating structure 26. The suction cups are pneumatically communicated with the suction chamber 43 along a rotational path of the suction cups from the input site 28 (shown on the left side of Figure 3) to the output site 29 (shown on the right side of Figure 3).

As shown in Figure 3, each of the suction cups making up the first and second gripping elements 31, 32 has a suction port 44 facing an outer side of the rotating structure 26 and an air outlet 45 facing an inner side of the rotating structure 26. The suction port 44 is communicated with the air outlet 45 by means of an air passage.

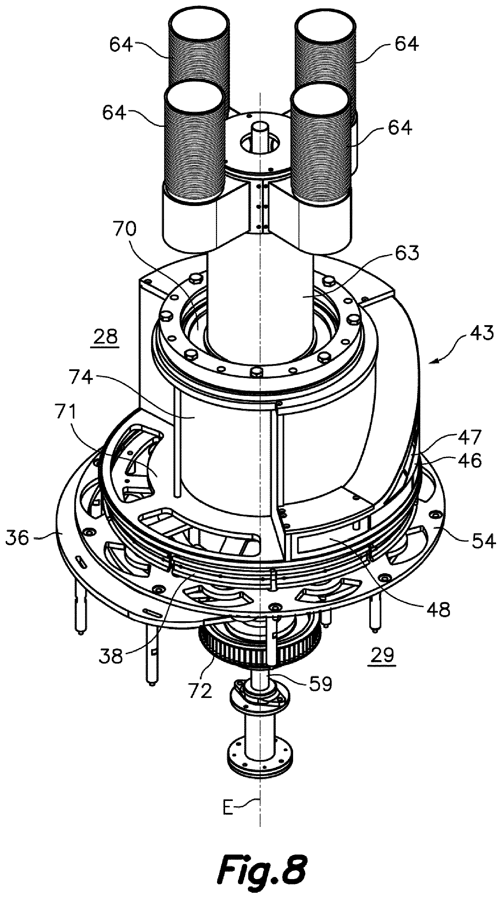

The suction chamber 43 (best shown in Figure 8) is pneumatically communicated with a low pressure source, such as a fan or an air exhaust (not shown) by means of a central main conduit 63 and a plurality of secondary output conduits 64. The suction chamber 43 has an upper plate 70, a lower plate 71, a cylindrical closing wall 74 and a cylindrical outer wall 46 provided with one or more openings 47, 48 facing and adjacent to a rotational path of the air outlets 45 of the suction cups between the input site 28 and the output site 29.

More specifically, the openings 47, 48 of the suction chamber 43 include one or more upper openings facing and adjacent to the rotational path of the air outlets 45 of the suction cups making up the first gripping elements 31 between the input site 28 and the output site 29 and one or more lower openings facing and adjacent to the rotational path of the air outlets 45 of the suction cups making up the second gripping elements 32 between the input site 28 and the output site 29. The upper openings and the lower openings are combined with one another in a region corresponding to the output site 29.

The Figure 3 illustrates by means of arrows a suction air circulation through the suction cups making up the first and second gripping elements 31, 32, the suction chamber 43, the central main conduit 63 and the plurality of secondary output conduits 64 during the operation of the transfer star wheel 25.

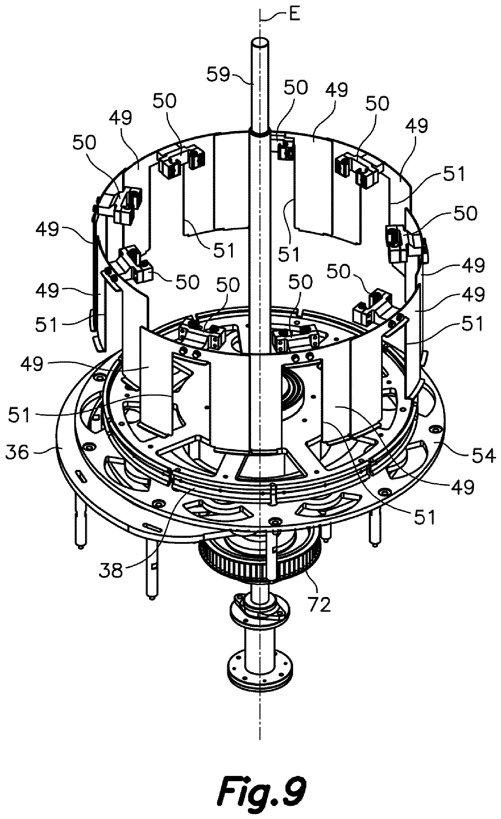

Each first slide 33 has a guide portion 68 parallel to the corresponding vertical guide 37 and a plate portion 69 in which the corresponding first gripping element 31 is installed. The first slides 33 are associated with first cover plates 49 (best shown in Figure 9) provided for preventing air losses through the openings 47, 48 of the suction chamber 43 in gaps existing between the first slides 33. The first cover plates 49 extend from both sides of the plate portion 69 of each first slide 33 in positions facing and adjacent to the cylindrical outer wall 46 of the suction chamber 43. The first cover plates 49 have end side portions partially overlapping one another.

Each first cover plate 49 is fixed to a carriage 50 slidingly coupled to the guide portion 68 of the first slide 33, and has an elongated opening 51 to which the plate portion 69 of the corresponding first slide 33 is slidingly coupled. The movement of the carriage 50 together with the corresponding first cover plate 49 along the guide portion 68 of the first slide 33 has a lower limit determined by contact between the first cover plate 49 and one of the second slides adjacent to the output site 29. The movement of the plate portion 69 of the first slide 33 along the elongated opening 51 of the first cover plate 49 has an upper limit determined by contact between the plate portion 69 of the first slide 33 and an upper end of the elongated opening 51 of the first cover plate 49.

The second slides 34 have fixed thereto second cover plates 52 (best shown in Figure 6) provided for preventing air losses through the openings 47, 48 of the suction chamber 43 in gaps existing between the second slides 34. The second cover plates 52 extend from both sides of each second slide 33 in positions facing and adjacent to the cylindrical outer wall 46 of the suction chamber 43. The second cover plates 52 have end side portions partially overlapping one another when the second slides 34 circumferentially approach one another during rotation of the rotating structure 26.

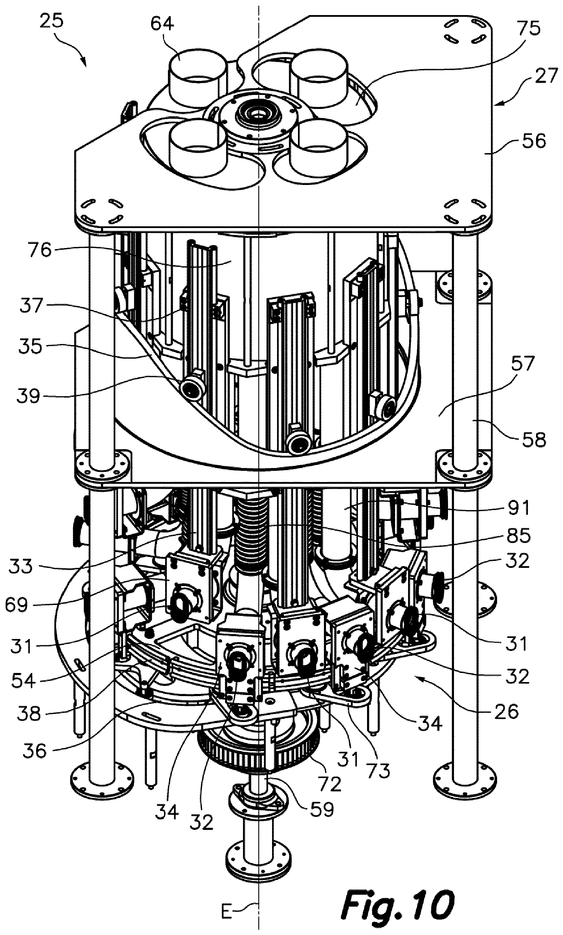

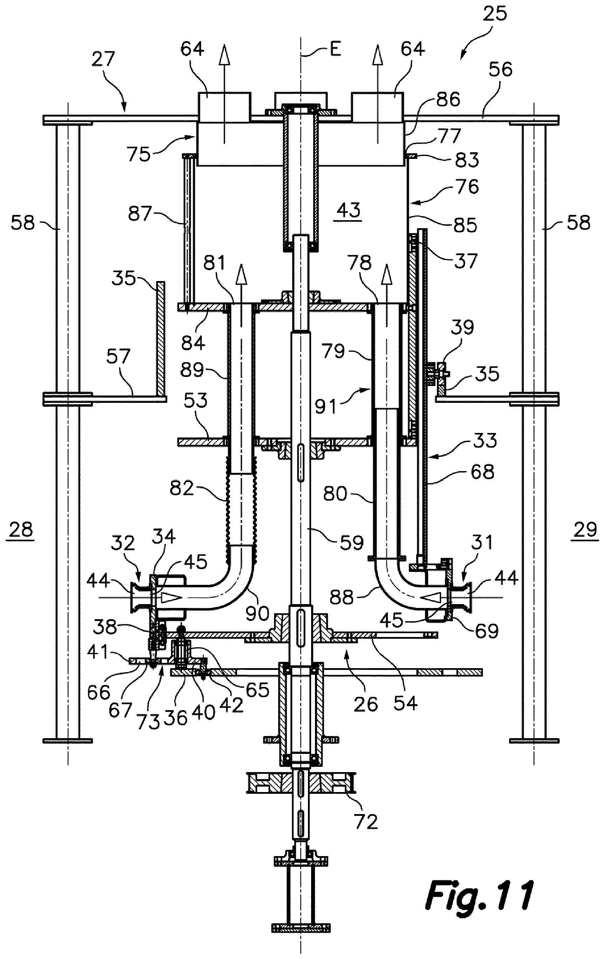

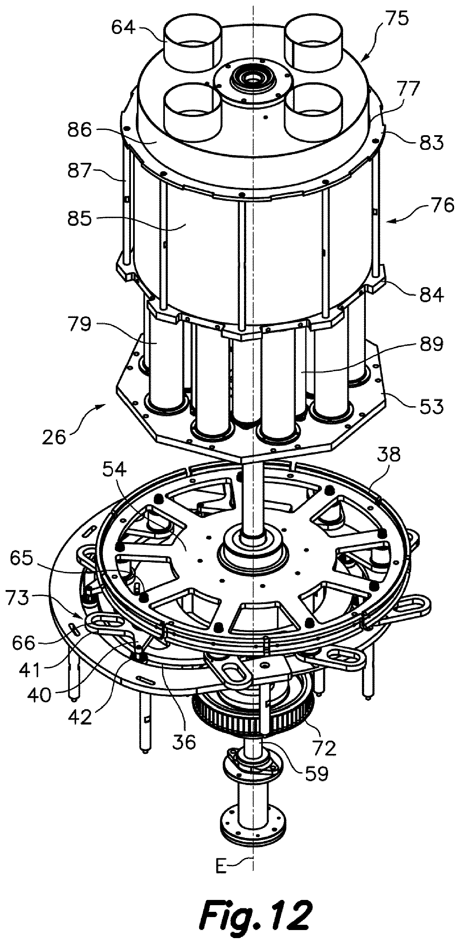

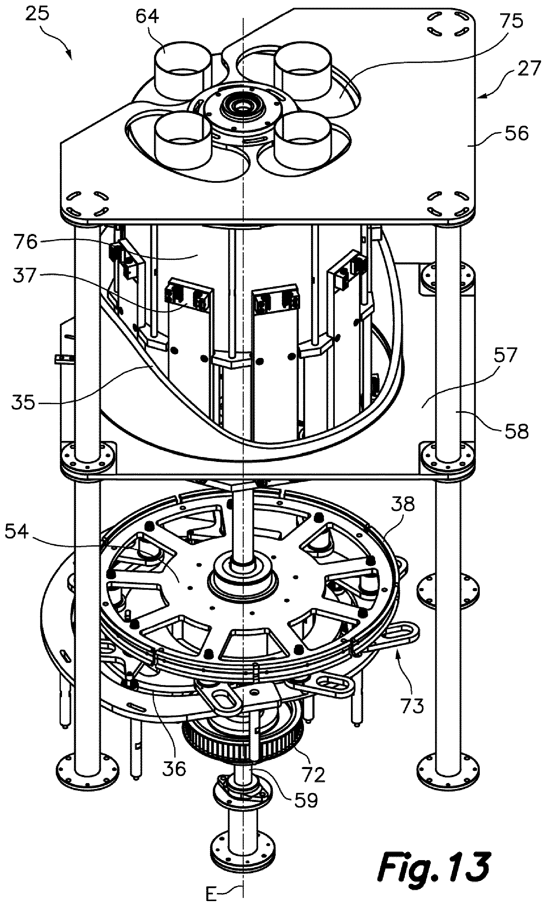

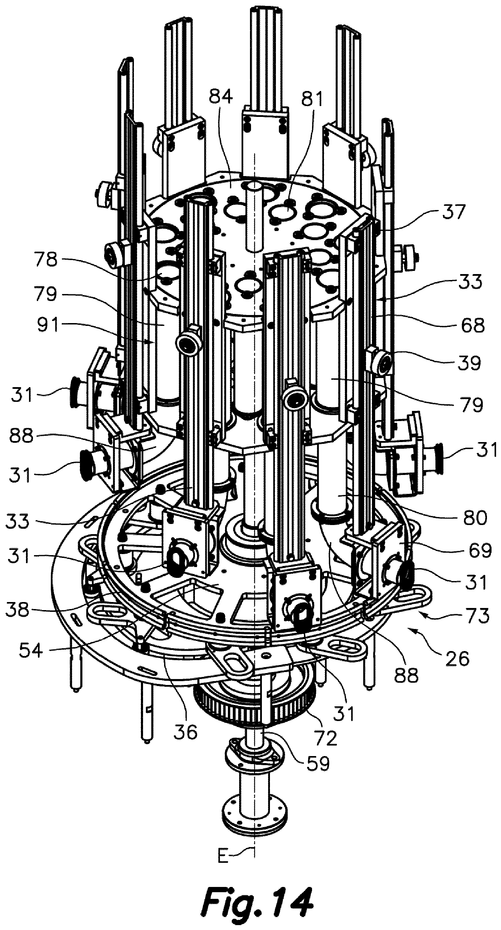

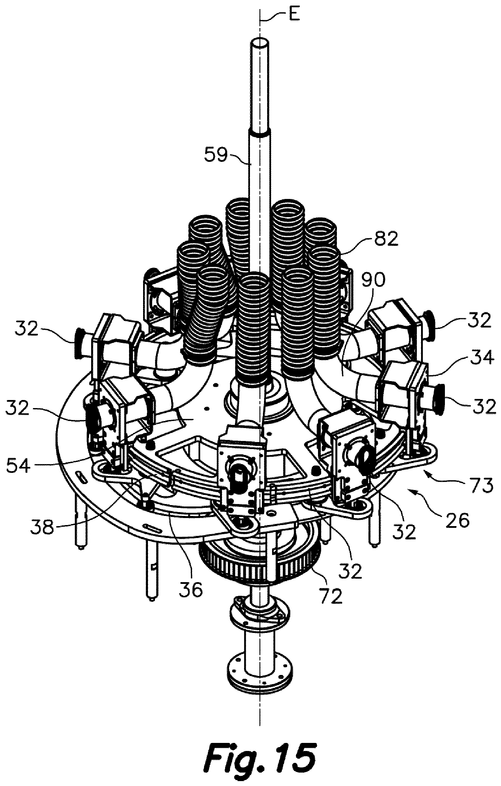

Figures 10 to 15 show a transfer star wheel according to a second embodiment of the present invention, which is similar to the first embodiment described above in relation to Figures 1 to 9 except in reference to the construction of the suction chamber 43 and the pneumatic communication of the suction cups making up the first and second gripping elements 31, 32 with the suction chamber 43. Accordingly, the description of the rotating and stationary structures 26, 27, of the first and second gripping elements 31, 32 and of the vertical and circumferential movement mechanisms will be omitted as they are similar to those described above in relation to the first embodiment. The same reference signs were used in the first and second embodiments to denote similar elements.

In this second embodiment, the suction chamber 43 comprises a stationary chamber section 75 fixed to an upper plate 56 of the stationary structure 27 and a rotating chamber section 76 fixed to the rotating structure 26.

The stationary chamber section 75 is pneumatically communicated with a low pressure source (not shown) by a plurality of output conduits 64 and the rotating chamber section 76 has first and second air inlets 78, 81 pneumatically communicated with the suction cups making up the first and second gripping elements 31, 32 by conduits.

The rotating chamber section 76 has an upper plate 83, a lower plate 83 connected to one another by connecting bars 87 and a surrounding wall 85 connected to the upper and lower plates 83, 84. The upper plate 84 of the rotating chamber section 76 has a circular opening 77 concentric with the axis of rotation E and the stationary chamber section 75 has a cylindrical wall 86 inserted in the circular opening 77 with a loose fit which allows contactless rotation of the rotating chamber section 76 with respect to the stationary chamber section 75 with minimal air loss. The stationary chamber section 75 has an open bottom, so the stationary chamber section 75 and the rotating chamber section 76 are pneumatically communicated to one another.

The lower plate 84 of the rotating chamber section 76 has a plurality of first air inlets 78 distributed at regular intervals around a circumference and at a first radial distance from the axis of rotation E and a plurality of second air inlets 81 distributed at regular intervals around a circumference and at a second radial distance from the axis of rotation E.

The suction cups making up the first gripping elements 31 are pneumatically communicated with the first air inlets 78 of the rotating chamber section 76 by telescopic conduits 91 including a first fixed conduit section 79 and a movable conduit section 80. The first fixed conduit section 79 is fixed to the lower plate 84 of the rotating chamber section 76 and to an upper plate 53 of the rotating structure 26. The movable conduit section 80 is fixed to the corresponding first slide 33 by means of a first bent conduit section 88 and connected to the air outlet 45 of the suction cup making up the corresponding first gripping element 31. The first fixed conduit sections 79 are arranged in positions parallel to the vertical guides 37 and the movable conduit sections 80 are slidingly inserted into the first fixed conduit sections 79.

The second air inlets 81 of the rotating chamber section 76 are made up of conduits including a second fixed conduit section 89 fixed to the lower plate 84 of the rotating chamber section 76 and to the upper plate 53 of the rotating structure 26, a second bent conduit section 90 fixed to the corresponding second slide 34 and connected to the air outlet 45 of the suction cup making up the corresponding second gripping element 32, and a flexible conduit section 82 connected by its ends to the second fixed conduit section 89 and to the second bent conduit section 90.

The telescopic conduits 91 allow the back and forth movement of the first slides 33 together with the first gripping elements 31 in vertical directions parallel to the axis of rotation E of the rotating structure 26 while the suction cups making up the first gripping elements 31 remain pneumatically communicated with the suction chamber 43.

The flexible conduit sections 82 allow the back and forth movement of the second slides 34 together with the second gripping elements 32 in circumferential directions concentric with the axis of rotation E of the rotating structure 26 while the suction cups making up the second gripping elements 32 remain pneumatically communicated with the suction chamber 43.

The scope of the present invention is defined in the attached claims.

## Claims

1. A transfer star wheel for transferring empty containers from an input site (28), in which empty containers (C) delivered successively from a closed circuit are arranged in first and second levels, vertically aligned and separated by distances equivalent to one pitch (P), to an output site (29), wherein said empty containers (C) are arranged in a row in said second level and separated by distances equivalent to half a pitch (P/2), comprising:
a rotating structure (26) operated to turn about a vertical axis of rotation (E) with respect to a stationary structure (27);
a plurality of first gripping elements (31) and a plurality of second gripping elements (32) distributed along a periphery of said rotating structure (26), wherein said first gripping elements (31) are arranged for gripping the empty containers (C) located in the first level at said input site (28) and said second gripping elements (32) are arranged for gripping the empty containers (C) located in the second level at the input site (28),
wherein said transfer star wheel (25) further comprises:
a vertical movement mechanism comprising first guiding elements, the vertical movement mechanism being connected to the first gripping elements (31) and configured for moving the first gripping elements (31) along the first guiding elements from the first level at the input site (28) to the second level at the output site (29) and back to the first level at the input site (28) in the course of each turn of the rotating structure (26); and
a circumferential movement mechanism comprising second guiding elements, the circumferential movement mechanism being connected to the first gripping elements (31) or the second gripping elements (32) and configured for moving the first gripping elements (31) or the second gripping elements (32) along the second guiding elements from a circumferential position corresponding to said pitch (P) at the input site (28) to a circumferential position moved half a pitch (P/2) at the output site (29) and back to the circumferential position corresponding to the pitch (P) at the input site (28) in the course of each turn of the rotating structure (26).
**characterized in that**:
the rotating structure (26) is a single rotating structure (26);
said first guiding elements comprise vertical guides (37) fixed to the rotating structure (26);
first slides (33) are slidingly coupled to said vertical guides (37);
the first gripping elements (31) are installed in said first slides (33); and
said second guiding elements comprise circumferential guides (38) fixed to the single rotating structure (26);
second slides (34) are slidingly coupled to said circumferential guides (38); and
the second gripping elements (32) are installed in said second slides (34).

2. The transfer star wheel according to claim 1, wherein said vertical movement mechanism comprises a first cam (35) fixed to said stationary structure (27) and first cam followers (39) fixed to said first slides (33) and coupled to said first cam (35), and wherein said circumferential movement mechanism comprises a second cam (36) fixed to the stationary structure (27) and rockers (73) pivotingly installed in the single rotating structure (26), where each of said rockers (73) comprises a first arm (40) carrying a second cam follower (42) coupled to said second cam (36) and a second arm (41) slidingly coupled to one of said second slides (34).

3. The transfer star wheel according to claim 1 or 2, wherein the first gripping elements (31) and the second gripping elements (32) comprise suction cups which are pneumatically communicated with a suction chamber (43) at least along a rotational path of said suction cups from the input site to the output site.

4. The transfer star wheel according to claim 3, wherein each of the suction cups making up the first and second gripping elements (31, 32) has a suction port (44) on an outer side of the single rotating structure (26) communicated with an air outlet (45) on an inner side of the single rotating structure (26).

5. The transfer star wheel according to claim 4, wherein said suction chamber (43) comprises a stationary chamber section (75) fixed in the stationary structure (27) and pneumatically communicated with a low pressure source and a rotating chamber section (76) fixed in the single rotating structure (26) and pneumatically communicated with the suction cups making up the first and second gripping elements (31, 32), and wherein said rotating chamber section (76) has a circular opening (77) concentric with the axis of rotation (E) and said stationary chamber section (75) has a cylindrical wall (86) inserted in said circular opening (77) with a loose fit which allows contactless relative rotation.

6. The transfer star wheel according to claim 5, wherein the suction cups making up the first gripping elements (31) are pneumatically communicated with first air inlets (78) of the rotating chamber section (76) by telescopic conduits (91) including a fixed conduit section (79) fixed to the rotating chamber section (76) in a position parallel to the vertical guides (37) and a movable conduit section (80) fixed to the corresponding first slide (33) and slidingly coupled in said fixed conduit section (79).

7. The transfer star wheel according to claim 5, wherein the suction cups making up the second gripping elements (32) are pneumatically communicated with second air inlets (81) of the rotating chamber section (76) by conduits including a flexible conduit section (82).

8. The transfer star wheel according to claim 4, wherein said suction chamber (43) is fixed in the stationary structure (27) and pneumatically communicated with a low pressure source, and has a cylindrical outer wall (46) provided with one or more openings (47, 48) facing and adjacent to a rotational path of said air outlets (45) of the suction cups between the input site and the output site.

9. The transfer star wheel according to claim 8, wherein said first slides (33) are associated with first cover plates (49) covering parts of said openings (47, 48) not facing the suction cups and said second slides (34) are associated with second cover plates (52) covering parts of said openings (47, 48) not facing the suction cups.

10. The transfer star wheel according to claim 9, wherein said first cover plates (49) extend from both sides of each first slide (33) in positions facing and adjacent to said cylindrical outer wall (46) of the suction chamber (43) and have end side portions partially overlapping one another.

11. The transfer star wheel according to claim 10, wherein each first cover plate (49) is fixed to a carriage (50) slidingly coupled to a guide portion (68) of the corresponding first slide (33) parallel to the vertical guide (37), and the first slide (33) has a plate portion (69) slidingly coupled to an elongated opening (51) existing in the first cover plate (49).

12. The transfer star wheel according to claim 10, wherein a movement of said carriage (50) along the vertical guide (37) has a limit determined by contact between the first cover plate (49) and one of the second slides (34) adjacent to the output site, and a movement of the first slide (33) along said elongated opening (51) of the first cover plate (49) has a limit determined by contact between the first slide (33) and an end of the elongated opening (51) of the first cover plate (49).

13. The transfer star wheel according to claim 9, wherein said second cover plates (52) are fixed to said second slides (34) and extend from both sides of each second slide (34) in positions facing and adjacent to said cylindrical outer wall (46) of the suction chamber (43), wherein the second cover plates (52) have end side portions partially overlapping one another when the second slides (34) circumferentially approach one another during rotation of the single rotating structure (26).

## Patentansprüche

1. Übertragungssternrad zur Übertragung von leeren Behältern von einer Eintrittsstelle (28), an der nacheinander von einem geschlossenen Kreislauf zugeführte leere Behälter (C) auf eine erste und eine zweite Ebene angeordnet, vertikal fluchtend ausgerichtet und durch jeweils einem Abstandsmaß (P) entsprechende Abstände voneinander getrennt werden, zu einer Austrittsstelle (29), wobei die genannten leeren Behälter (C) auf der genannten zweiten Ebene in jeweils einem halben Abstandsmaß (P/2) entsprechenden Abständen voneinander getrennt werden, umfassend:
eine Drehstruktur (26), die zum Drehen um eine vertikale Drehachse (E) relativ zu einer feststehenden Struktur (27) angetrieben wird;
eine Vielzahl erster Greifelemente (31) und eine Vielzahl zweiter Greifelemente (32), die entlang des Umfangs der genannten Drehstruktur (26) verteilt sind, wobei die genannten ersten Greifelemente (31) zum Greifen der auf der ersten Ebene an der genannten Eintrittsstelle (28) befindlichen leeren Behälter (C) und die genannten zweiten Greifelemente (32) zum Greifen der auf der zweiten Ebene an der Eintrittsstelle (28) befindlichen leeren
Behälter (C) angeordnet sind,
wobei das genannte Übertragungssternrad (25) ferner Folgendes umfasst:
einen Vertikalbewegungsmechanismus, der erste Führungselemente umfasst, wobei der Vertikalbewegungsmechanismus mit den ersten Greifelementen (31) verbunden und dazu ausgelegt ist, im Verlauf jeweils einer Umdrehung der Drehstruktur (26) die ersten Greifelemente (31) entlang der ersten Führungselemente von der ersten Ebene an der Eintrittsstelle (28) auf die zweite Ebene an der Austrittsstelle (29) und zurück auf die erste Ebene an der Eintrittsstelle (28) zu bewegen; und
einen Umfangsbewegungsmechanismus, der zweite Führungselemente umfasst, wobei der Umfangsbewegungsmechanismus mit den ersten Greifelementen (31) oder den zweiten Greifelementen (32) verbunden und dazu ausgelegt ist, im Verlauf jeweils einer Umdrehung der Drehstruktur (26) die ersten Greifelemente (31) oder die zweiten Greifelemente (32) entlang der zweiten Führungselemente von einer dem genannten Abstandsmaß (P) entsprechenden Position an der Eintrittsstelle (28) zu einer um ein halbes Abstandsmaß (P/2) verschobenen Umfangsposition an der Austrittsstelle (29) und zurück zu der dem Abstandsmaß (P) an der Eintrittsstelle (28) entsprechenden Umfangsposition zu bewegen,
**dadurch gekennzeichnet, dass**:
die Drehstruktur (26) eine Drehstruktureinheit (26) ist;
die genannten ersten Führungselemente an der Drehstruktur (26) befestigte vertikale Führungen (37) aufweisen;
die genannten vertikalen Führungen (37) gleitend mit ersten Gleitkörpern (33) verbunden sind;
die ersten Greifelemente (31) an den genannten ersten Gleitkörpern (33) angebracht sind; und
die genannten zweiten Führungselemente an der Drehstruktureinheit (26) befestigte Umfangsführungen (38) umfassen;
die genannten Umfangsführungen (38) gleitend mit zweiten Gleitkörpern (34) verbunden sind; und
die zweiten Greifelemente (32) an den genannten zweiten Gleitkörpern (34) angebracht sind.

2. Übertragungssternrad nach Anspruch 1, wobei der genannte Vertikalbewegungsmechanismus einen an der genannten feststehenden Struktur (27) befestigten ersten Nocken (35) und an den genannten ersten Gleitkörpern (33) befestigte und mit dem genannten ersten Nocken (35) verbundene erste Nockenstößel (39) umfasst, und wobei der genannte Umfangsbewegungsmechanismus einen an der feststehenden Struktur (27) befestigten zweiten Nocken (36) und drehbar an der Drehstruktureinheit (26) angebrachte Kipphebel (73) umfasst, wobei jeder der genannten Kipphebel (73) einen ersten Arm (40), der einen mit dem genannten zweiten Nocken (36) verbundenen zweiten Nockenstößel (42) trägt, und einen zweiten Arm, der gleitend mit einem der genannten zweiten Gleitkörper (34) verbunden ist, umfasst.

3. Übertragungssternrad nach Anspruch 1 oder 2, bei dem die ersten Greifelemente (31) und die zweiten Greifelemente (32) Saugnäpfe aufweisen, die - mindestens entlang einer Rotationsbahn der genannten Saugnäpfe von der Eintrittsstelle zur Austrittsstelle - pneumatisch verbunden sind.

4. Übertragungssternrad nach Anspruch 3, wobei jeder der Saugnäpfe, aus denen die ersten und zweiten Greifelemente (31, 32) bestehen, eine mit einem Luftauslass (45) auf der Innenseite der Drehstruktureinheit (26) in Verbindung stehende Saugöffnung (44) an der Außenseite der Drehstruktureinheit (26) aufweist.

5. Übertragungssternrad nach Anspruch 4, wobei die genannte Saugkammer (43) einen an der feststehenden Struktur (27) befestigten und pneumatisch mit einer Niederdruckquelle verbundenen feststehenden Kammerteil (75) und einen an der Drehstruktureinheit (26) befestigten und pneumatisch mit den Saugnäpfen, aus denen die ersten und zweiten Greifelemente (31, 32) bestehen, verbundenen rotierenden Kammerteil (76) umfasst, und wobei der genannte rotierende Kammerteil (76) eine kreisförmige Öffnung (77) konzentrisch zur Drehachse (E) aufweist und der genannte feststehende Kammerteil (75) eine in die genannte kreisförmige Öffnung (77) lose eingesetzte zylindrische Wand (86) aufweist, wodurch eine berührungslose Relativdrehung ermöglicht wird.

6. Übertragungssternrad nach Anspruch 5, bei dem die Saugnäpfe, aus denen die ersten Greifelemente (31) bestehen, über Teleskopleitungen (91), die einen an dem rotierenden Kammerteil (76) parallel zu den vertikalen Führungen (37) befestigten festen Leitungsteil (79) und einen an dem zugehörigen ersten Gleitkörper (33) befestigten und gleitend an den genannten festen Leitungsteil (79) angeschlossenen beweglichen Leitungsteil (80) umfassen, mit ersten Lufteinlässen (78) des rotierenden Kammerteils (76) pneumatisch verbunden sind.

7. Übertragungssternrad nach Anspruch 5, bei dem die Saugnäpfe, aus denen die zweiten Greifelemente (32) bestehen, über Leitungen mit einem flexiblen Leitungsteil (82) mit zweiten Lufteinlässen (81) des rotierenden Kammerteils (76) pneumatisch verbunden sind.

8. Übertragungssternrad nach Anspruch 4, wobei die genannte Saugkammer (43) an der feststehenden Struktur (27) befestigt und pneumatisch mit einer Niederdruckquelle verbunden ist und eine zylindrische Außenwand (46) mit einer oder mehreren Öffnungen (47, 48) aufweist, die einer Rotationsbahn der genannten Luftauslässe (45) der Saugnäpfe zwischen der Eintrittsstelle und der Austrittsstelle zugewandt und an diese angrenzend sind.

9. Übertragungssternrad nach Anspruch 8, wobei die genannten ersten Gleitkörper (33) ersten Abdeckplatten (49) zugeordnet sind, die Teile der genannten, nicht den Saugnäpfen zugewandten Öffnungen (47, 48) abdecken, und die genannten zweiten Gleitkörper (34) zweiten Abdeckplatten (52) zugeordnet sind, die Teile der genannten, nicht den Saugnäpfen zugewandten Öffnungen (47, 48) abdecken.

10. Übertragungssternrad nach Anspruch 9, wobei sich die genannten ersten Abdeckplatten (49) von beiden Seiten jedes ersten Gleitkörpers (33) aus in Positionen, die der genannten zylindrischen Außenwand (46) der Saugkammer (43) zugewandt und an diese angrenzend sind, erstrecken und sich teilweise überlappende Endseitenbereiche aufweisen.

11. Übertragungssternrad nach Anspruch 10, wobei jede erste Abdeckplatte (49) an einem Schlitten (50) befestigt ist, der gleitend mit einem Führungsbereich (68) des zugehörigen ersten Gleitkörpers (33) parallel zur vertikalen Führung (37) verbunden ist, und der erste Gleitkörper (33) einen Plattenbereich (69) aufweist, der gleitend mit einem in der ersten Abdeckplatte (49) vorhandenen Langloch (51) verbunden ist.

12. Übertragungssternrad nach Anspruch 10, wobei eine Bewegung des genannten Schlittens (50) entlang der vertikalen Führung (37) eine durch den Kontakt zwischen der ersten Abdeckplatte (49) und einem der zweiten Gleitkörper (34) neben der Austrittsstelle festgelegte Begrenzung hat, und eine Bewegung des ersten Gleitkörpers (33) entlang des genannten Langlochs (51) der ersten Abdeckplatte (49) eine durch den Kontakt zwischen dem ersten Gleitkörper (33) und einem Ende des Langlochs (51) der ersten Abdeckplatte (49) festgelegte Begrenzung hat.

13. Übertragungssternrad nach Anspruch 9, wobei die genannten zweiten Abdeckplatten (52) an den genannten zweiten Gleitkörpern (34) befestigt sind und sich von beiden Seiten jedes zweiten Gleitkörpers (34) aus in Positionen, die der genannten zylindrischen Außenwand (46) der Saugkammer (43) zugewandt und an diese angrenzend sind, erstrecken, wobei die zweiten Abdeckplatten (52) Endseitenbereiche aufweisen, die sich teilweise überlappen, wenn sich die zweiten Gleitkörper (34) während der Drehung der Drehstruktureinheit (26) in Umfangsrichtung einander nähern.

## Revendications

1. Roue étoilée de transfert pour transférer des récipients vides d'un site d'entrée (28), dans lequel des récipients vides (C) délivrés successivement d'un circuit fermé sont agencés à des premier et deuxième niveaux, verticalement alignés et séparés par des distances équivalant à un écart des dents (P), à un site de sortie (29), où ces récipients vides (C) sont agencés en une rangée à ce deuxième niveau et séparés par des distances équivalant à la moitié d'un écart des dents (P/2), comportant :
une structure rotative (26) actionnée pour tourner sur un axe de rotation vertical (E) par rapport à un structure fixe (27) ;
une pluralité de premiers éléments de préhension (31) et une pluralité de deuxièmes éléments de préhension (32) distribués le long d'une périphérie de cette structure rotative (26), où ces premiers éléments de préhension (31) sont agencés pour saisir les récipients vides (C) situés au premier niveau à ce site d'entrée (28) et ces deuxièmes éléments de préhension (32) sont agencés pour saisir les récipients vides (C) situés au deuxième niveau au site d'entrée (28),
où cette roue étoilée de transfert (25) comporte en outre :
un mécanisme à mouvement vertical comportant des premiers éléments de guidage, le mécanisme de mouvement vertical étant relié aux premiers éléments de préhension (31) et configurés pour déplacer les premiers éléments de préhension (31) le long des premiers éléments de guidage du premier niveau au site d'entrée (28) au deuxième niveau du site de sortie (29) et de retour au premier niveau au site d'entrée (28) au cours de chaque tour de la structure rotative (26) ; et
un mécanisme à mouvement circonférentiel comportant des deuxièmes éléments de guidage, le mécanisme de mouvement circonférentiel étant relié aux premiers éléments de préhension (31) ou aux deuxièmes éléments de préhension (32) et configuré pour déplacer les premiers éléments de préhension (31) ou les deuxièmes éléments de préhension (32) le long des deuxièmes éléments de guidage depuis une position circonférentielle correspondant à cet écart des dents (P) au site d'entrée (28) à une position circonférentielle déplacée la moitié de l'écart des dents (P/2) au site de sortie (29) et de retour à la position circonférentielle correspondant à l'écart des dents (P) au site d'entrée (28) au cours de chaque tour de la structure rotative (26),
**caractérisé en ce que** :
la structure rotative (26) est une unique structure rotative (26) ;
ces premiers éléments de guidage comportent des guides verticaux (37) fixés à la structure rotative (26) ;
des premières glissières (33) sont couplées glissantes à ces guides verticaux (37) ;
les premiers éléments de préhension (31) sont installés dans ces premières glissières (33) ; et
ces deuxièmes éléments de guidage comportent des guides circonférentiels (38) fixés à l'unique structure rotative (26) ;
des deuxièmes glissières (34) sont couplées glissantes à ces guides circonférentiels (38) ; et
les deuxièmes éléments de préhension (32) sont installés dans ces deuxièmes glissières (34).

2. La roue étoilée de transfert conformément à la revendication 1, où ce mécanisme à mouvement vertical comporte une première came (35) fixée à cette structure fixe (27) et des premiers galets de came (39) fixés sur ces premières glissières (33) et couplés à cette première came (35) et où ce mécanisme à mouvement circonférentiel comporte une deuxième came (36) fixée sur la structure fixe (27) et des balanciers (73) installés pivotants dans l'unique structure rotative (26), où chacun de ces balanciers (73) comporte un premier bras (40) portant un deuxième galet de came (42) couplé à cette deuxième came (36) et un deuxième bras (41) couplé coulissant à une de ces deuxièmes glissières (34).

3. La roue étoilée de transfert conformément à la revendication 1 ou 2, où les premiers éléments de préhension (31) et les deuxièmes éléments de préhension (32) comportent des ventouses qui communiquent pneumatiquement avec une chambre d'aspiration (43) au moins le long d'un chemin de rotation de ces ventouses du site d'entrée au site de sortie.

4. La roue étoilée de transfert conformément à la revendication 3, où chacune des ventouses composant les premier et deuxième éléments de préhension (31, 32) possède un orifice d'aspiration (44) sur le côté extérieur de l'unique structure rotative (26) qui communique avec une sortie d'air (45) sur un côté intérieur de l'unique structure rotative (26).

5. La roue étoilée de transfert conformément à la revendication 4, où cette chambre d'aspiration (43) comporte une section de chambre fixe (75) fixée sur la structure fixe (27) et qui communique pneumatiquement avec une source de pression basse et une section de chambre rotative (76) fixée sur l'unique structure rotative (26) et qui communique pneumatiquement avec les ventouses composant les premier et deuxième éléments de préhension (31, 32) et où cette section de chambre rotative (76) possède une ouverture circulaire (77) concentrique avec l'axe de rotation (E) et cette section de chambre fixe (75) possède une paroi cylindrique (86) insérée dans cette ouverture circulaire (77) avec ajustement libre qui permet la rotation relative sans contact.

6. La roue étoilée de transfert conformément à la revendication 5, où les ventouses composant les premiers éléments de préhension (31) communiquent pneumatiquement avec des premières entrées d'air (78) de la section de chambre rotative (76) par des conduits télescopiques (91) comprenant une section de conduit fixe (79) fixé sur la section de chambre rotative (76) dans une position parallèle aux guides verticaux (37) et une section de conduit mobile (80) fixée sur la première glissière correspondante (33) et couplée coulissante dans cette section de conduit fixe (79).

7. La roue étoilée de transfert conformément à la revendication 5, où les ventouses composant les deuxièmes éléments de préhension (32) communiquent pneumatiquement avec des deuxièmes sorties d'air (81) de la section de chambre rotative (76) par des conduits comprenant des sections de conduit flexible (82).

8. La roue étoilée de transfert conformément à la revendication 4, où cette chambre d'aspiration (43) est fixée sur la structure fixe (27) et communique pneumatiquement avec une source de pression basse et possède une paroi cylindrique extérieure (46) possédant une ou plusieurs ouvertures (47, 48) faisant face et adjacentes à un chemin de rotation de ces sorties d'air (45) des ventouses entre le site d'entrée et le site de sortie.

9. La roue étoilée de transfert conformément à la revendication 8, où ces premières glissières (33) sont associées à des premiers chapeaux (52) couvrant des parties de ces ouvertures (47, 48) ne faisant pas face aux ventouses et ces deuxièmes glissières (34) sont associées à des deuxièmes chapeaux (52) couvrant des parties de ce ouvertures (47,48) ne faisant pas face aux ventouses.

10. La roue étoilée de transfert conformément à la revendication 9, où ces premiers chapeaux (49) s'étendent sur les deux côtés de chaque première glissière (33) dans des positions faisant face et adjacentes à cette paroi cylindrique extérieure (46) de la chambre d'aspiration (43) et possèdent des portions d'extrémité se chevauchant en partie.

11. La roue étoilée de transfert conformément à la revendication 10, où chaque premier chapeau (49) est fixé au chariot (50) couplé coulissant à une portion de guide (68) de la première glissière correspondante (33) parallèle au guide vertical (37) et la première glissière (33) possède une portion plate (69) couplée coulissante à une ouverture allongée (51) existant sur le premier chapeau (49).

12. La roue étoilée de transfert conformément à la revendication 10, où un mouvement de ce chariot (50) le long du guide vertical (37) possède une limite déterminée par contact entre le premier chapeau (49) et une des deuxièmes glissières (34) adjacentes au site de sortie et un mouvement de la première glissière (33) le long de cette ouverture allongée (51) du premier chapeau (49) possède une limite déterminée par contact entre la première glissière (33) et une extrémité de l'ouverture allongée (51) du premier chapeau (49).

13. La roue étoilée de transfert conformément à la revendication 9, où ces deuxièmes chapeaux (52) sont fixés sur ces deuxièmes glissières (34) et s'étendent sur les deux côtés de chaque glissière (34) dans des positions faisant face et adjacentes à cette paroi cylindrique externe (46) de la chambre d'aspiration (43), où les deuxièmes chapeaux (52) possèdent des portions latérales d'extrémité se chevauchant en partie lorsque les deuxièmes glissières (34) se rapprochent circonférentiellement durant la rotation de l'unique structure rotative (26).
